Europäisches Patentamt

European Patent Office

Office européen des brevets

(19)

(11) Publication number: **0 634 851 A2**

# EUROPEAN PATENT APPLICATION

(12)

(21) Application number: **94110072.9**

(22) Date of filing: **29.06.94**

(51) Int. Cl.6: **H04J 3/06**

(30) Priority: **14.07.93 IT MI931549**

(43) Date of publication of application:
**18.01.95 Bulletin 95/03**

(84) Designated Contracting States:
**DE ES FR GB IT NL**

(71) Applicant: **ITALTEL SOCIETA ITALIANA
TELECOMUNICAZIONI s.p.a.
P.le Zavattari, 12
I-20149 Milano (IT)**

(72) Inventor: **Lazzari, Paolo
Via Ghidoni 6
I-26100 Cremona (IT)**

(74) Representative: **Giustini, Delio
c/o Italtel Società Italiana
Telecomunicazioni s.p.a.
P.O. Box 10
I-20019 Settimo Milanese (MI) (IT)**

(54) **Process and device for the equalization of the transmission time of a plurality of radio base stations.**

(57) Process and device for the equalization the transmission time To of m radio base stations (RFP) linked through one or more PCM lines to a master unit (MUI).

The process consists of measuring the delay (RRS) by which the slave stations receive a reference signal (Tm) emitted by the master unit, and storing in each slave station (RFP) a representative information of the complement of said delay (RRS) with respect to the above-said transmission time To.

The device comprises a counter (CK), qualified for the calculation of said reference signal (Tm), set up by the synchronism signal allocated in the time slot zero of the PCM frame, and blocked by a signal (r) available at the output of a recognition unit of the time slot zero of the PCM frame emitted by the interlocutor station.

Fig.3

EP 0 634 851 A2

Rank Xerox (UK) Business Services
(3.10/3.09/3.3.4)

Technical Field

The present invention relates to a process for the equalization of a plurality of radio base stations in a telecommunication network where the condition of time synchronism between m stations is required so that all stations emit a frame in synchronism in the zone covered by the network.

The invention is preferably applied in private telephony systems known as DECT (Digital European Telecommunication Cordless), however it can be used in a general way in radio mobile systems where the time synchronization in transmission is required as for example in simulcast systems.

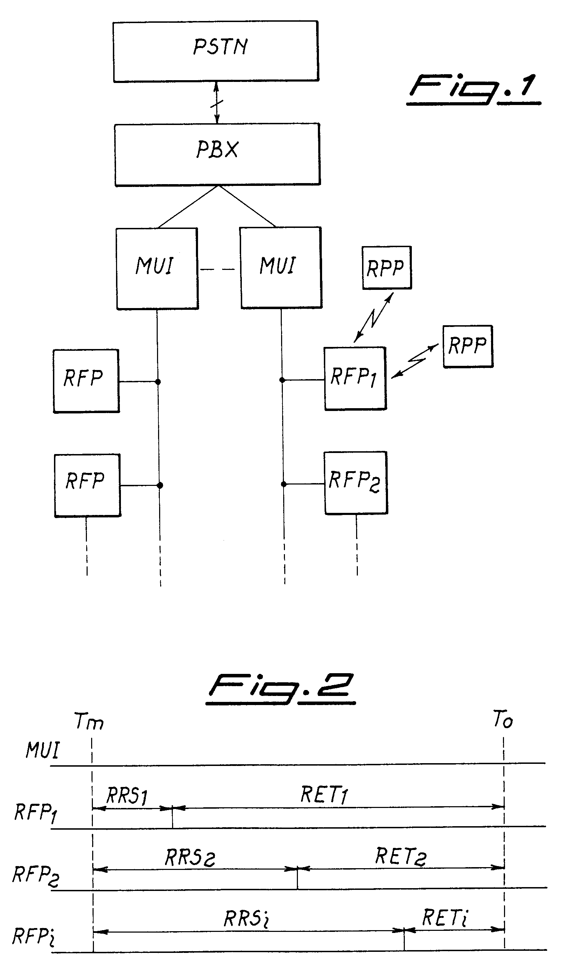

The structure of a possible DECT system is schematically illustrated in Figure 1.

It comprises groups of radio fixed parts RFP with the stations of each group connected among them for example by means of a "dorsal" link, and in particular a PCM link at 2 Mbit/sec. The dorsals link up with the PBX interconnecting station between the DECT system and the public telephone network PSTN through the same number of Modular Unit Interfaces (MUI).

The RFPs can also be linked to the MUI unit according to other configurations like for example the "star" like one, etc. as will be explained hereafter.

The radio portable parts RPP set up connections with the RFP stations via radio and from there with the public network PSTN or another radio portable part RPP.

The radio base stations acquire informations in order to transmit a DECT radio frequency frame in a synchronous way, that is all stations of the network must transmit simultaneously their frame at a time To, as required by the specifications of the above mentioned DECT system.

The informations setting up the DECT frame are transferred to the RFP stations along the PCM dorsal, and therefore each RFP receives the signals with a certain delay, which increases with the growing of the distance between the RFP and the MUI. Especially if the MUI or the PABX send a synchronism signal Tm along this dorsal it is received by the stations in successive times, and therefore - where they would transmit the PCM signals as a response to the reception of the synchronism signal Tm - the condition of time synchronisataion between the station would not be satisfied, a synchronization which is required for the correct functioning of the systems at issue.

In order to satisfy this synchronization conditions it is necessary to introduce for each one of the RFPs a different frame emission delay in response to the reception of the synchronism pulse Tm, and this delay must be of such entity that all RFP stations transmit all PCM signals at the time To.

In order to get a synchronous frame emission, to each RFP station must therefore be communicated or associated an indication number representative of the time delay by which it must transmit the proper frame compared to the time of reception of the synchronism signal Tm.

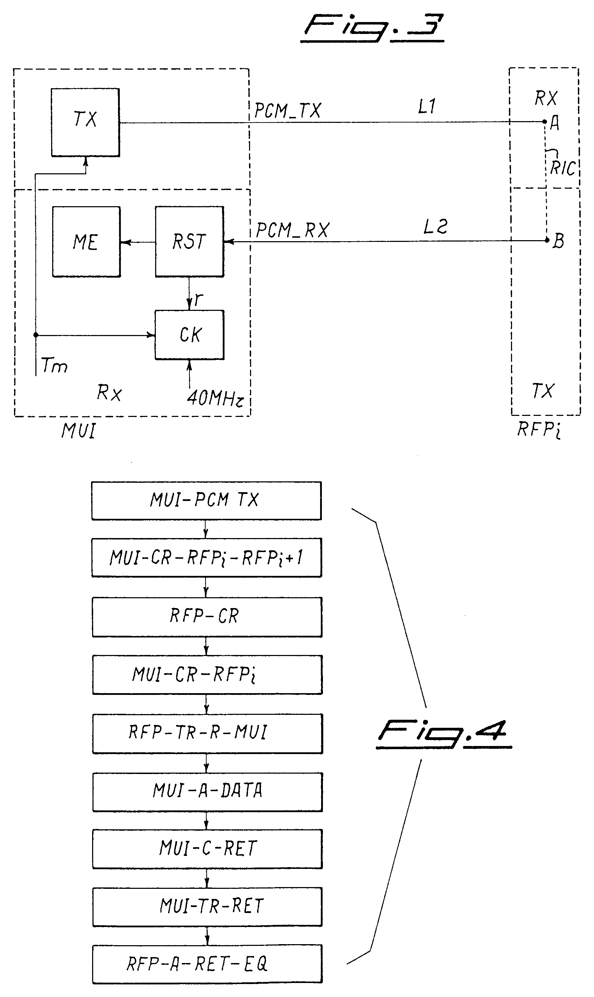

Figure 2 shows a time diagram showing the delays by which the individual RFP stations receive the synchronism pulse (indicated in the figure by the abbreviations RRS) as well as the delay by which each RFP station must emit the PCM frame (indicated in the figure by the abbreviations RET) compared to the reception of the synchronism pulse Tm, so that all stations transmit the proper frame at the time To.

In particular compared for example to the RFP2 station, this station will receive the synchronism pulse emitted by the unit MUI at the time Tm with a delay equal to RRS2, and it must emit the PCM frame with a delay equal to RET2 so that it turns out to be synchronous with the other RFP stations.

In order to define the delay value it is possible to measure the length of the cable installed between two adjacent stations, calculate the delay introduced by it, and considering the different stations connected to a MUI, the delays to be stored in each station compared to the synchronism pulse. But this type of process turns out to be long, relatively inexact and anyhow unable to compensate delay variations which occurred following to the installation of the network.

It is possible to insert a reference signal in the PCM frame and to use this signal to calculate the delay section link, however this process involve modification of the devices in order to generate this signal, to identify this signal etc., and therefore involve to add in the devices means able to perform this functions. In addition it would be necessary to bypass the elastic memory included in the receiving portion of the stantions in order to compensate the delay section link.

Object of the Invention

It is the object of the present invention to supply a process for the equalization of the radio base stations in a telecommunication network without the drawbacks and the limitations mentioned above.

In particular the process according to the invention makes it possible to obtain the values of the section delays without using reference signals generated on purpose and without modifying the construction of the radio fixed parts.

## Disclosure of the Invention

The invention achieves these objects through a process to equalize the transmission time To of radio fixed parts linked through one or more PCM links to a master unit in a communication network of the cordless type where the time synchronisataion between the stations is required, characterized in that it comprises the following steps:

a) measuring the time elapsed between the transmission of a reference signal Tm from said master station to at least one slave station along said PCM line and the reception in said master station of the signal retransmitted by the slave station;

b) deducting from said time the delay introduced by the slave station in order to retransmit said reference signal and dividing by 2 the result of the subtraction, in order to obtain the delay by which the slave station receives the reference or synchronism signal;

c) storing in the slave station a representative information of the complement of said delay by which the slave station receives the reference signal compared to said transmission time To.

According to a preferred embodiment of the invention the stations between which the delays are measured are adjacent stations along the PCM line, but nothing forbids to realize this between stations which are not adjacent provided that the intermediate stations are to be disconnected (or at least in the condition that the delay introduced by them is known).

Moreover the invention consists of a device for the equalization of the transmission time To of the radio base station linked by one or more PCM links to a master unit in a communication network of the cordless type in which the time synchronization between the stations is required, characterized in that each station includes:

- a transmitter section suitable to emit a PCM frame at the time defined by the synchronism signal allocated in the zero time slot of the frame itself;

- a receiver section including a counter suitable for the calculation of said synchronism signal and blocked by a signal available at the output of a detection unit of the synchronism signal always allocated in the zero time slot of a PCM frame emitted by the transmitter section of an interlocutor station;

- means suitable to order the recirculation of the received PCM frame on the receiver section at the output of the proper transmission section.

## Brief Description of the Drawings

The features of the present invention which a believed to be novel are set forth with particularity in the appended claims.

The invention, together with further objects and advantages thereof, may best be understood by making reference to the following description taken together with the accompanying drawings wherein:

- figure 1 shows schematically the structure of a possible DECT system;

- figure 2 is a graph illustrating an example of delays of the different stations linked to a same dorsal;

- figure 3 shows the device according to the invention of the unit MUI and of a generic RFP station;

- figure 4 shows a first flow chart obtained by the application of the process based on the present invention;

- figure 5 shows a second flow chart obtained by the application of the process according to the present invention;

- figure 6 illustrates a third flow chart obtained by the application of the process based on the present invention.

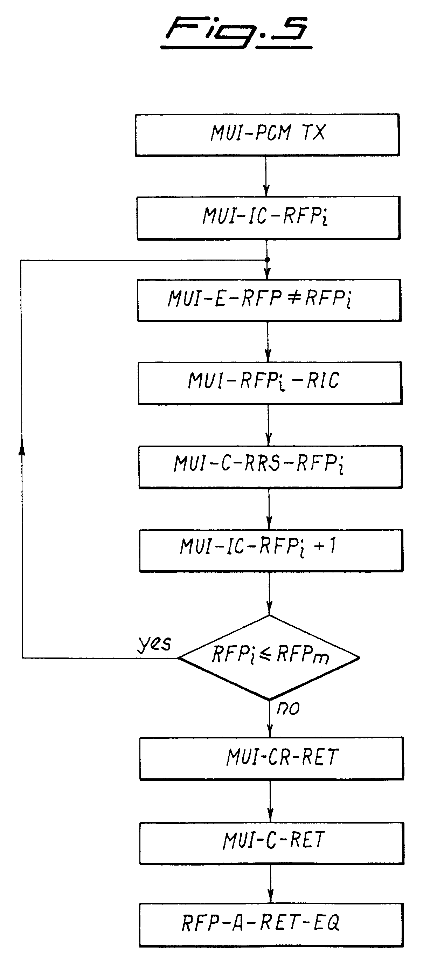

Referring to the preceding figures and in particular to figure 3, illustrating two adjacent stations (as for example the unit MUI and a generic station RFPi) connected to each other, the station MUI transmits on the line L1 for the measurement of the delay a reference signal, and the station RFPi carries out the recirculation RIC (indicated by the hatched line), connecting point A of the receiver section RX and point B of the transmitter section TX, and it retransmits to the unit MUI the informations received on line L2, or the reference signal. The delay time k introduced by the cyclic repassing RIC is known or anyhow measurable (as it is dependent on the implemented hardware structure), and moreover the outward line and the return line L1 and L2 are substantially identical, so that it is reasonable to suppose that they have the same physical characteristics and the same length.

The delay T introduced by the line between the unit MUI and the station RFPi is given by $(T-k)/2$ where T is the overall time between the message transmission, and its reception in the unit MUI, and k is the known delay introduced by the recirculation RIC.

According to a preferred embodiment, the synchronism signal allocated in the zero time slot of the PCM TX frame is used as reference signal.

As known, the PCM frame has a duration of 125 μsec and is set up by 32 time intervals or time slots of 8 bits with the zero time slot reserved for the synchronisation, and each one of the other 31 ones are associated to the same number of possible subscribers.

The PCM frame is transmitted by the TX section of the MUI unit at the time defined by the synchronism pulse Tm and always according to the a preferred embodiment this Tm pulse is also used to able for calculation a counter CK receiving at the counting input a signal with a quite high frequency (for example about 40 MHz). The PCM frame emitted by the MUI unit arrives at the RX unit of the RFP station which - as the synchronism signal occur (zero time slot) - provides for ordering the recirculation RIC and for sending the PCM frame back to the MUI unit.

This frame arrives at the RX section of the MUI unit and in particular at the input of a RST unit able to recognize the zero time slot.

When the RST unit detects on the PCM frame the presence of the zero time slot (synchronism pulse Tm) it activates the proper output r blocking the calculation of the counter CK which content is in this way representative of said time T.

Adopting a frequency signal sufficiently high it turns out to be possible to carry out the above-said measuring of the time T with considerable precision.

The stations provide normally in reception for an elastic memory ME for the compensation of the delay introduced by the section. This elastic memory provides in this way for delay of the acquisition of the received frame of a time equal to the frame duration reduced by the section delay. According to the invention the delay is calculated before the elastic memory ME, and more precisely using the signal available at the output of the unit RST (already foreseen in the station for other purposes).

It will be possible to appreciate the fact that applying the process according to the invention the measure of the delays is obtained without any modification of the system.

The hypothesis mentioned-above has been illustrated considering the MUI unit the master unit and the RFP units the slave units. Obviously as the MUI unit as well as the RFP units are equipped with the circuitry as mentioned before, the process according to the invention can also be applied in the cases in which a whatever RFP station operates as a master unit.

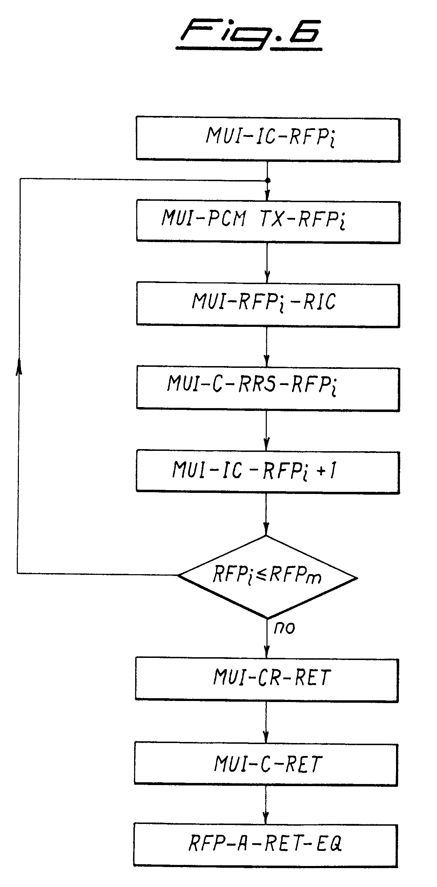

The process according to the invention will become clearer by the description of the flow charts illustrated in the figures 4, 5 and 6.

In particular in figure 4 a flow chart is shown which is valid if there is a "dorsal" link of the RFP units and in particular in the case of adopting a measuring approach of the delays between "pairs of stations".

The flow chart provides in this case for the following steps:

- the MUI unit transmits the PCM TX frame (MUI-PCM TX)
- the MUI unit asks the RFP units for the activation of the process for the calculation of the delay times with the following station (MUI-CR-RFPi, RFPi + 1).
- The RFP stations calculate the delay (RFP-CR).
- The MUI unit calculates the delay with the first RFP station (MUI-CR-RFPi).
- The RFP stations transmit the delay to the MUI unit (RFP-TR-R-MUI).
- The MUI unit acquires the data (MUI-A-DATA).
- The MUI unit elaborates and calculates the equalization RET delay compared to the time To (MUI-C-RET).
- The MUI unit transmits to the RFP stations the equalization delay RET compared to the time To (MUI-TR-REP-RET).
- The RFP stations acquire RET and equalize (RFP-A-RET-EQ).

Figure 5 shows a flow chart valid in presence of a dorsal link of the RFP units and especially in the case of adopting the measurement approach of the delays between the "MUI unit and the individual stations" RFP.

- The MUI unit transmits the PCM TX frame (MUI-PCM TX).
- The MUI unit starts up the CK counter of the RFPi station (MUI-IC-RFPi).
- The MUI unit communicates the RFP stations which are different from RFPi to disconnect themselfes from the link (MUI-E-RFP#RFPi).
- The MUI unit communicates the RFPi station to realize the recirculation RIC of the link (MUI-RFPi-RIC).
- The MUI unit calculates the reception delay of the synchronism pulse RRS of the RFPi station (MUI-C-RRS-RFPi).
- The MUI unit starts up the counter of the station RFPi + 1, and if RFPi + 1 is smaller or equal to the maximum number of the RFP stations to be equalized the last four steps described before with reference to the RFPi unit (MUI-IC-RFPi + 1) are repeated.
- When the calculation of the delay is carried out for all stations, that is (RFP = RFPm), the MUI unit calculates the equalization delay compared to the time To RET (MUI-CR-RET) of each RFP station.
- The MUI unit communicates each RFP station the equalization delay RET (MUI-C-RET).
- The RFP stations acquire the equalization delay RET and equalize (RFP-A-RET-EQ).

Figure 6 illustrates a flow chart valid if there is a "star" like link of the RFP units with the MUI unit.

- The MUI unit starts up the counter of the RFPi station (MUI-IC-RFPi).
- The MUI unit transmits the PCM TX frame to the RFPi station (MUI-PCM TX-RFPi).
- The MUI unit communicates the RFPi station to realize the recirculation RIC of the link (MUI-RFPi-RIC).
- The MUI unit calculates the reception delay of the synchronism pulse RRS of the RFPi station (MUI-C-RRS-RFPi).
- The MUI unit starts up the station counter RFPi + 1 and if RFPi + 1 is smaller or equal to the maximum number of the RFP stations to be equalized the last four steps described before with reference to the RFPi unit will be repeated (MUI-IC-RFPi + 1).
- When the calculation of the delay has been carried out for all stations, that is (RFP = RFPm), the MUI unit calculates the equalization delay RET compared to the time To (MUI-CR-RET) of each RFP station.
- The MUI unit communicates each RFP station the equalization delay RET (MUI-C-RET).
- The RFP stations acquire the equalization delay and equalize (RFP-A-RET-EQ).

Although the invention has been illustrated referring to a preferred type of realization it will be understood by those skilled in the art that various modifications and changes may be made to the present invention without deporting from the scope and spirit thereof.

## Claims

1. Process for the equalization of the transmission time To of radio base stations (RFP) linked through one or more PCM lines to a master unit (MUI) in a communication network of the cordless type in which the time synchronization between the stations is required, characterized in that it includes the following steps:

    a) measuring the time (T) elapsed between the transmission of a reference signal Tm from said master station (MUI) to at least one slave station (RFPi) along said PCM line and the reception in said master station (MUI) of the signal retransmitted from the slave station (RFPi);

    b) deducting from said time (T) the delay (K) introduced by the slave station to retransmit said reference signal (Tm) and divide by 2 the result of the subtraction in order to obtain the delay (RRS) by which the slave station receives the reference or synchronism signal (Tm);

    c) storing in the slave station (RFP) a representative information of the complement of said delay (RRS) by which the slave station receives the reference signal compared to the above-said transmission time To.

2. Process as claimed in Claim 1, characterized in that said reference signal Tm is set up by the synchronism signal allocated in the zero time slot of the PCM frame.

3. Process as claimed in Claims 1 and 2 in which the slave stations (RFP) are linked to a dorsal set up by a PCM link, characterized in that it comprises the following steps:

    a) the master station (MUI) activates the frame PCM TX;

    b) the master station (MUI) asks the slave stations (RFP) for the calculation of the delay (RRS) by which a generic station receives the reference signal emitted by the adjacent station;

    c) the master station calculates the delay as mentioned at step b) with respect to the first slave station (RFP);

    d) the slave stations (RFP) transmit the result of the calculation (RRS) as at step b) to the master station (MUI);

    e) The master station (MUI) calculates said representative informations (RET) of the complement of the results (RRS) as at step d) compared to the time To and transmits the relative complement (RET) to the slave stations (RFP). (Figure 4).

4. Process as claimed in claims 1 and 2 wherein the slave stations are linked to a "dorsal" set up by a PCM link, characterized in that it comprises the following phases:

    a) the master station (MUI) emits the PCM frame and communicates:

        i) the slave station interested by the measurement the retransmission of the PCM frame;

        ii) the slave stations not interested by the measurement to disconnect from the dorsal,

    and carries out the calculation of the delay (RRS) by which the slave station at issue receives the reference signal;

    b) repeats the operation as at step a) for all slave stations;

    c) the master station the master station (MUI) calculates said representative informations of the complement of the delay calculation (RRS) by which the slave stations receive the reference signal compared to the above-said time of transmission To and transmits the result (RET) of this calculation to the slave stations (figure 5).

**5.** Process as claimed in Claims 1 and 2 wherein the slave stations are "star like" linked to a master station, characterized in that it comprises the following steps:

a) the master station (MUI) transmits the PCM frame to a slave station, communicates to the slave stations not interested by the measurement to disconnect from it and carries out the calculation of the delay (RRS) by which the slave station interested by the measurement receives the reference signal;

b) the step as at point a) is selectively repeated for all slave stations (RFP) linked to the master station (MUI);

c) the master station (MUI) calculates said representative informations of the complement of the delay calculation (RRS) by which the slave stations receive the reference signal with respect to the above-said transmission time To and transmits the result (RET) of this calculation to the slave stations (figure 6).

**6.** Device for the equalization of the transmission time To of radio base stations (RFP) linked through one or more PCM links to a master unit (MUI) in a communication network of the cordless type in which the time synchronization is required between the stations, characterized in that each station includes:

- a transmitting section suitable to emit a PCM frame in the time defined by the synchronism signal (Tm) allocated in the zero time slot of the frame itself;

- a receiving section including a counter (CK) qualified for the calculation by said synchronism signal (Tm) and blocked by a signal available at the output of a unit (RST) for the detection of the synchronism signal (Tm) always allocated in the zero time slot of a PCM frame emitted by the transmitting section of an interlocutor station;

- means suitable to order the recirculation (RIC) of the PCM frame received on the receiving section at the output of the proper transmitting section.

**7.** Device as claimed in Claim 6, characterized in that said counter (CK) receives at the counting input a signal which frequency is in the order of 40 MHz.

**8.** Device as claimed in Claim 6, characterized in that said unit (RST) of recognition of the synchronism signal (Tm) is linked upstream of the elastic memory (ME) normally foreseen for the compensation of the delay introduced by the PCM section.

Fig.1

Fig.2

*Fig.3*

*Fig.4*

# Fig.5

```
┌─────────────────────────┐
│      MUI-PCM TX          │
└─────────────────────────┘
            │
            ▼
┌─────────────────────────┐
│      MUI-IC-RFP_i        │
└─────────────────────────┘
            │
            ▼
┌─────────────────────────┐
│   MUI-E-RFP ≠ RFP_i      │
└─────────────────────────┘
            │
            ▼
┌─────────────────────────┐
│     MUI-RFP_i - RIC      │
└─────────────────────────┘
            │
            ▼
┌─────────────────────────┐
│    MUI-C-RRS-RFP_i       │
└─────────────────────────┘
            │
            ▼
┌─────────────────────────┐
│    MUI-IC-RFP_i +1       │
└─────────────────────────┘
            │
            ▼
        ╱───────────╲
  yes  ╱ RFP_i ≤ RFP_m ╲
◄─────╱               ╲
       ╲               ╱
        ╲─────────────╱
            │ no
            ▼
┌─────────────────────────┐
│      MUI-CR-RET          │
└─────────────────────────┘
            │
            ▼
┌─────────────────────────┐
│      MUI-C-RET           │
└─────────────────────────┘
            │
            ▼
┌─────────────────────────┐
│     RFP-A-RET-EQ         │
└─────────────────────────┘
```

Fig.6